# EUROPÄISCHE PATENTSCHRIFT

(11) **EP 1 870 727 B1**
(45) Veröffentlichungstag und Bekanntmachung des Hinweises auf die Patenterteilung: **22.12.2010**
(21) Anmeldenummer: 07107981.8
(22) Anmeldetag: 11.05.2007
(51) Int. Cl.: G01S 7/40, G01S 13/93, G01S 7/497, G01S 7/52, G01S 17/93, G01S 15/93

(54) **Fahrerassistenzsystem mit Selbsttestvorrichtung**
Driver assistance system with self-test device
Système d'assistance avec un dispositif d'auto-test

(30) Priorität: 23.06.2006 DE 102006028922
(43) Veröffentlichungstag der Anmeldung: 26.12.2007
(73) Patentinhaber: ROBERT BOSCH GMBH, 70442 Stuttgart (DE)
(72) Erfinder: Schneider, Thomas, 71706 Markgröningen (DE)

(56) Entgegenhaltungen:
- DE-A1- 10 343 178

## Beschreibung

### Stand der Technik

Die Erfindung betrifft ein Fahrerassistenzsystem mit mindestens einem Funktionsmodul, das dazu ausgebildet ist, Empfehlungen für das Systemverhalten zu erzeugen, einem Erfassungsmodul zur Erfassung des tatsächlichen Fahrerverhaltens, einem Vergleichsmodul zum Vergleich der Empfehlungen mit dem tatsächlichen Fahrerverhalten, und einer Aktorik zu Umsetzung der Empfehlungen.

Fahrerassistenzsysteme dienen in Kraftfahrzeugen dazu, den Fahrer bei der Führung des Kraftfahrzeugs zu unterstützen und/oder zu entlasten. Sie umfassen eine Sensorik zur Erfassung der aktuellen Verkehrssituation, ein elektronisches Datenverarbeitungssystem zur Bewertung der Verkehrssituation und zur Erzeugung von Steuerbefehlen sowie eine Aktorik, die anhand der Steuerbefehle aktiv in die Fahrzeugführung eingreift. Ein typisches Beispiel eines solchen Fahrerassistenzsystems ist ein ACC-System (Adaptive Cruise Control). Die Sensorik des ACC-Systems weist mindestens einen Radarsensor auf, mit dem vorausfahrende Fahrzeuge geortet und deren Abstände und Relativgeschwindigkeiten gemessen werden können. Anhand dieser Daten wird dann so in das Antriebssystem und/oder das Bremssystem des Fahrzeugs eingegriffen, daß die Geschwindigkeit des Fahrzeugs automatisch an die Geschwindigkeit eines etwa auf der eigenen Spur vorausfahrenden Fahrzeugs angepaßt wird, so daß dieses Fahrzeug in einem angemessenen Sicherheitsabstand verfolgt wird.

Andere Beispiele für Fahrerassistenzsysteme sind etwa Antiblockiersysteme zur automatischen Regelung des Bremsdruckes der Räder, Antriebsschlupf-Regelsysteme, automatische Spurführungs- und Spurwechselassistenten, Kollisionswarnsysteme, automatische Notbremssysteme oder Pre-Crash Systeme, die bei einer bevorstehenden Kollision Maßnahmen einleiten, um die Unfallfolgen abzumildern.

Bei einigen dieser Fahrerassistenzsysteme, beispielsweise bei ACC-Systemen und Spurführungsassistenten ist der Funktionsumfang zumindest insofern variabel, als das System entweder aktiv oder inaktiv sein kann. Es gibt jedoch auch Fahrerassistenzsysteme, bei denen bestimmte Assistenzfunktionen zugeschaltet werden können oder gewisse Parameter, die die Eingriffsmöglichkeiten des Systems beschränken, variabel sind. In diesem Fall kann somit die Variation des Funktionsumfangs auch darin bestehen, daß Teilfunktionen zu- oder abgeschaltet werden oder die den Funktionsumfang einschränkenden Parameter verändert werden. Beispielsweise können bei einem ACC-System die maximal zulässige Fahrzeugbeschleunigung und Fahrzeugverzögerung durch variable Grenzwerte beschränkt sein. Beispiele für zuschaltbare Zustatzfunktionen sind bei einem ACC-System etwa ein sogenanntes Stop & Go System, das es erlaubt, das Fahrzeug automatisch in den Stand zu bremsen, gegebenenfalls einschließlich einer autonomen Anfahrfunktion, die unter bestimmten Bedingungen ein automatisches Anfahren des Fahrzeugs steuert, so daß das ACC-System beispielsweise im Stop & Go Betrieb bei einem Verkehrsstau autonom die gesamte Längsführung des Fahrzeugs übernehmen kann.

Die DE 103 43 178 A1 beschreibt ein Fahrerassistenzsystem nach dem Oberbegriff des Anspruchs 1, das in de Lage ist, bei abgeschaltetem System das Verhalten des Fahrers zu beobachten, um etwas über die Gewohnheiten und Vorlieben des Fahrers zu lernen, und dann die Strategie des Assistenzsystems an das Fahrerverhalten anzupassen.

Aus Gründen der Verkehrssicherheit muß gewährleistet sein, daß eine Fahrerassistenzfunktion nur dann aktivierbar ist, wenn sie auch wirklich einwandfrei arbeitet. Vor dem Einbau des Fahrerassistenzsystems bzw. vor Auslieferung des Fahrzeugs werden deshalb die Komponenten des Fahrerassistenzsystems sorgfältigen Prüfungen unterzogen. Außerdem ist es bekannt, gewisse Komponenten des Fahrerassistenzsystems redundant auszulegen, so daß verschiedene Teilkomponenten einander gegenseitig überwachen können. Da jedoch die von der Sensorik erfaßten Daten oftmals mehrdeutig sind und keine eindeutige Interpretation der Verkehrssituation zulassen, läßt sich auch mit sorgfältigen Testprozeduren und auch mit hoher Redundanz der Systemkomponenten nicht immer zuverlässig feststellen, ob eine Komponente der Sensorik oder des Datenverarbeitungssystems wirklich korrekt arbeitet.

### Offenbarung der Erfindung

Aufgabe der Erfindung ist des deshalb, die Zuverlässigkeit von Fahrerassistenzsystemen weiter zu erhöhen.

Diese Aufgabe wird bei einem Fahrerassistenzsystem mit variablem Funktionsumfang dadurch gelöst, daß ein Beschränkungsmodul dazu ausgebildet ist, den Funktionsumfang des Funktionsmoduls zu beschränken, indem es die Empfehlungen ganz oder teilweise unterdrückt, so daß sie zwar noch erzeugt aber nicht an die Aktorik weitergeleitet werden, daß das Erfassungsmodul und das Vergleichsmodul bei beschränktem Funktionsumfang des Funktionsmoduls als Selbsttestvorrichtung zum Test dieses Funktionsmoduls arbeiten, und daß ein Aktivierungsmodul dazu ausgebildet ist, in Abhängigkeit von dem Resultat des von dem Vergleichsmodul durchgeführten Vergleichs auf das Beschränkungsmodul einzuwirken und bei Übereinstimmung der Empfehlungen mit dem tatsächlichen Fahrerverhalten die Beschränkung des Funktionsumfangs aufzuheben.

Durch die von dem Funktionsmodul ausgegebenen Empfehlungen wird in einem Betriebszustand, in dem die betreffende Assistenzfunktion abgeschaltet oder in ihrem Umfang eingeschränkt ist, gewissermaßen das Verhalten des Assistenzsystems simuliert, das sich ergäbe, wenn das System in vollem Umfang aktiv wäre. Wenn das Modul deaktiviert oder der Funktionsumfang des Systems eingeschränkt ist, werden diese Empfehlungen jedoch nicht oder nicht vollständig durch die Aktorik umgesetzt. Die Funktionen, die das System in diesem Betriebszustand nicht bieten kann, müssen deshalb vom Fahrer übernommen werden. Mit Hilfe der Sensorik wird das tatsächliche Verhalten des Fahrers erfaßt, und durch das Vergleichsmodul werden die Empfehlungen mit dem tatsächlichen Verhalten verglichen. Wenn das tatsächliche Fahrerverhalten hinreichend genau mit den vom Funktionsmodul ausgegebenen Empfehlungen übereinstimmt, läßt sich daraus schließen, daß das Modul einwandfrei arbeitet und somit betriebsbereit ist. Wenn dagegen größere Diskrepanzen auftreten, deutet dies darauf hin, daß eine Störung vorliegt und folglich dieses Modul nicht aktiviert werden sollte oder sein Funktionsumfang nicht weiter ausgedehnt werden sollte. Auf diese Weise läßt sich insbesondere in komplexen und schwer interpretierbaren Verkehrssituationen ein Selbsttest des Fahrerassistenzsystems und damit eine Steigerung seiner Zuverlässigkeit errichten.

Vorteilhalfte Ausgestaltungen und Weiterbildungen der Erfindung sind in den Unteransprüchen angegeben.

### Kurze Beschreibung der Zeichnungen

Ein Ausführungsbeispiel der Erfindung ist in den Zeichnungen dargestellt und in der nachfolgenden Beschreibung näher erläutert.

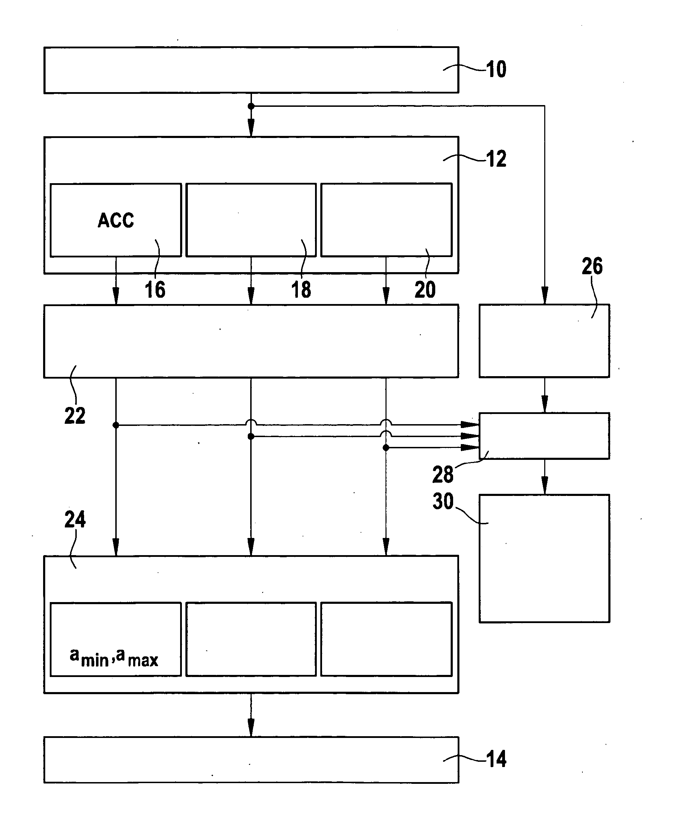

Die einzige Zeichnungsfigur zeigt:
ein Blockdiagramm eines erfindungsgemäßen Fahrerassistenzsystems.

### Ausführungsform der Erfindung

Als Beispiel für ein Fahrerassistenzsystem ist in der Zeichnung ein ACC-System dargestellt. Dieses System umfaßt eine Sensorik 10, die in üblicher Weise mindestens einen Radarsensor zur Überwachung des Vorfelds des Fahrzeugs aufweist, ein elektronisches Datenverarbeitungssystem, in den mehrere Fahrerassistenzfunktionen 12 implementiert sind, und eine Aktorik 14, die nach Maßgabe der vom Datenverarbeitungssystem erzeugten Befehle in die Längsführung des Fahrzeugs eingreift. Diese Grundfunktionen eines ACC-Systems sind als solche bekannt und werden deshalb hier nicht näher beschrieben.

Im gezeigten Beispiel umfassen die Assistenzfunktionen 12 eine übliche ACC-Funktion, mit der entweder die Geschwindigkeit des Fahrzeugs auf eine vom Fahrer gewählte Wunschgeschwindigkeit geregelt wird oder, sofern der Radarsensor ein vorausfahrendes Fahrzeug geortet hat, der Abstand zu dem vorausfahrenden Fahrzeug auf einen angemessenen Sollwert geregelt wird. Es soll hier angenommen werden, daß die für diese Funktion vorgesehenes ACC-Modul 16 auch eine Stop-Funktion aufweist und somit in der Lage ist, das Fahrzeug etwa beim Auffahren auf ein Stauende automatisch in den Stand zu bremsen. Als weiteres Funktionsmodul ist ein Anfahrmodul 18 vorgesehen, das es dann ermöglicht, das automatische Anfahren des Fahrzeugs zu steuern, wenn sich das Vorderfahrzeug wieder in Bewegung setzt und außerdem gewisse Zusatzbedingungen erfüllt sind, beispielsweise die Bedingung, daß durch die Sensorik 10 keine stehenden Hindernisse vor dem Fahrzeug geortet werden. Weiterhin umfassen die Assistenzfunktionen 12 im gezeigten Beispiel ein Notbremsmodul 20, das automatisch eine Notbremsung des Fahrzeugs einleitet, wenn sich aus den Sensordaten ergibt, daß eine Kollision mit einem Hindernis unmittelbar bevorsteht.

Während des Betriebs des Fahrzeugs sind alle drei Assistenzfunktionen 12 ständig uneingeschränkt in Betrieb, und sie geben Befehle aus, die das empfohlene Systemverhalten 22 charakterisieren und im Prinzip direkt an die Aktorik 14 weitergeleitet werden könnten, um den vollen Funktionsumfang des Assistenzsystems zu nutzen.

Bei der hier gezeigten Ausführungsform können jedoch alle drei Assistenzfunktionen mehr oder weniger strengen Funktionseinschränkungen unterliegen, die durch ein Beschränkungsmodul 24 spezifiziert werden. Das Beschränkungsmodul 24 wirkt gewissermaßen als Filter, durch den die von den Funktionsmodulen 16, 18, 20 ausgegebenen Befehle unterdrückt oder modifiziert werden, bevor sie tatsächlich an die Aktorik 14 weitergeleitet werden.

Für das ACC-Modul 16 können die Funktionseinschränkungen zum einen darin bestehen, daß das Modul ganz deaktiviert ist, das heißt, daß seine Befehle durch das Beschränkungsmodul 24 unterdrückt werden, oder darin, daß die maximal zulässige Fahrzeugverzögerung (negative Beschleunigung) durch einen Grenzwert aₘᵢₙ und/oder die maximal zulässige Fahrzeugbeschleunigung durch einen Grenzwert aₘₐₓ beschränkt wird. Bezüglich des Anfahrmoduls 18 und des Notbremsmoduls 20 bestehen die Funktionseinschränkungen darin, daß die von diesen Funktionsmodulen ausgegebenen Befehle entweder unterdrückt werden oder nicht. Im Ergebnis sind diese Funktionsmodule, obgleich sie ständig aktiv sind, somit entweder eingeschaltet oder abgeschaltet.

Die Sensorik 10 liefert nicht nur Daten über das Verkehrsumfeld, sondern auch Daten über den Zustand des eigenen Fahrzeugs, beispielsweise dessen Geschwindigkeit, Beschleunigung, Gierrate, Aktivierungszustand der Fahrzeugbremse und dergleichen. Anhand dieser Größen wird in einem Erfassungsmodul 26 das tatsächliche Verhalten des Fahrers verfolgt. Soweit das ACC-System in Funktion ist und der Fahrer diesem System die Längsführung des Fahrzeugs überläßt, stimmt das vom Erfassungsmodul 26 erfaßte Fahrerverhalten mit dem Verhalten des ACC-Systems überein. Insbesondere dann, wenn der Funktionsumfang des ACC-Systems durch das Beschränkungsmodul 24 eingeschränkt ist, gibt es jedoch Situationen, in denen der Fahrer aktiv in die Längsführung des Fahrzeugs eingreifen muß. Diese Eingriffe werden von dem Erfassungsmodul 26 erfaßt. In einem Vergleichsmodul 28 werden dann diese Eingriffe des Fahrers mit dem empfohlenen Systemverhalten 22 verglichen, d. h. mit den von den Funktionsmodulen 16, 28, 20 ausgegebenen Befehlen, die nicht wirksam werden können, weil sie durch das Beschränkungsmodul 24 unterdrückt oder modifiziert werden. Auf diese Weise läßt sich prüfen, inwieweit das vom ACC-System empfohlene aber möglicherweise nicht tatsächlich umgesetzte Systemverhalten mit dem tatsächlichen Verhalten des Fahrers übereinstimmt. Bei guter Übereinstimmung kann geschlossen, daß die betroffenen Funktionsmodule einwandfrei arbeiten, so daß sie gefahrlos zugeschaltet werden können oder, im Falle des ACC-Moduls 16, daß die durch die Grenzwerte aₘᵢₙ und aₘₐₓ spezifizierten Beschränkungen gelockert werden können.

Ein Aktivierungsmodul 30 wirkt auf das Beschränkungsmodul 24 ein, um die Funktionseinschränkungen nach und nach zu lockern oder ganz aufzuheben, in dem Maße, in dem das empfohlene Systemverhalten 22 durch das tatsächliche Verhalten des Fahrers bestätigt wurde.

Je nach Ausführungsform kann der Übegang vom beschränkten zum erweiterten Funktionsumfang mit Hilfe des Aktivierungsmoduls 30 einmalig nach erster Inbetriebnahme des Fahrzeugs erfolgen oder auch wiederholt, beispielsweise jeweils nach dem Einschalten der Zündung.

Beispielsweise können die Grenzwerte aₘᵢₙ und aₘₐₓ beim Einschalten der Zündung zunächst auf -0,3 g bzw. 0,3 g eingestellt sein, so daß das Fahrzeug durch das ACC-System nur moderat beschleunigt oder verzögert werden kann.

Im allgemeinen wird der Fahrer das ACC-Modul 16 nicht sofort bei Antritt der Fahrt aktivieren, sondern erst zu einem späteren Zeitpunkt, wenn, etwa bei einer Fahrt auf einer Landstraße oder Autobahn geeignete Bedingungen für die Nutzung dieses Systems vorliegen. Wenn diese Bedingungen nicht mehr vorliegen, wird der Fahrer möglicherweise auch das ACC-System von Hand wieder deaktivieren. "Mit Deaktivierung" ist hier jedoch nur gemeint, daß das Beschränkungsmodul 24 die Befehle des ACC-Moduls 16 unterdrückt. Das Systemverhalten 22 wird aber gleichwohl durch diese Befehle charakterisiert.

Wenn das ACC-Modul 16 eine Soll-Verzögerung des Fahrzeugs berechnet, die größer ist als der Grenzwert -aₘᵢₙ, so wird das Fahrzeug bei aktivem ACC-Modul tatsächlich nur mit -aₘᵢₙ verzögert, und es besteht die Gefahr, daß zu dicht auf das Vorderfahrzeug aufgefahren wird. Das ACC-System wird sich dann wie üblich selbst deaktivieren und eine Übernahmeaufforderung an den Fahrer ausgeben. Auch in diesem Fall erfolgt die Deaktivierung des ACC-Moduls nur durch Unterdrückung der Befehle im Beschränkungsmodul 24, so daß auch nach einer solchen Übernahmeaufforderung wieder das empfohlene Systemverhalten 22 mit dem tatsächlichen Fahrerverhalten verglichen werden kann.

So ist es in den Betriebsphasen, in denen das ACC-Modul deaktiviert ist, möglich, die tatsächlichen Beschleunigungen und Verzögerungen des Fahrzeugs mit den vom ACC-Modul 16 empfohlenen Beschleunigungen und Verzögerungen zu vergleichen.

Die dabei festgestellten Abweichungen werden im Aktivierungsmodul 30 über eine gewisse Zeitspanne nach Ausmaß und Häufigkeit verfolgt, und wenn nur selten größere Abweichungen auftreten, kann daraus geschlossen werden, daß das ACC-System die Verkehrssituationen korrekt bewertet und richtig auf diese Situationen reagiert. In dem Fall wird das Aktivierungsmodul 30 den Grenzwert amin senken und/oder den Grenzwert aₘₐₓ erhöhen, und so ein dynamischeres Verhalten des Systems in den Phasen zulassen, in denen der Fahrer das ACC-Modul 16 aktiviert hat.

Das Vergleichsmodul 28 kann die Diskrepanzen zwischen den vom ACC-Modul 16 ausgegebenen Beschleunigungen und Verzögerungen und dem tatsächlichen Fahrerverhalten jedoch auch dann auswerten, wenn das ACC-Modul 16 aktiv ist. Solche Diskrepanzen werden sich bei aktivem ACC-Modul dann ergeben, wenn der Fahrer korrigierend in das Systemverhalten eingreift. Beispielsweise wird der Fahrer beim Anfahren in einer Ampelschlange durch Betätigung des Gaspedals eine zusätzliche Beschleunigung veranlassen, wenn er das Gefühl hat, daß das eigene Fahrzeug nicht schnell genug auf die vorausfahrenden Fahrzeuge aufschließt. Das Aktivierungsmodul 30 kann im Laufe der Zeit solche Präferenzen des Fahrers "lernen" und darauf mit einer Erhöhung des Grenzwertes aₘₐₓ reagieren.

Andererseits ist es auch denkbar, daß das ACC-Modul 16 beim Einschalten der Zündung noch gar nicht aktivierbar ist sondern erst später durch das Aktivierungsmodul 30 automatisch aktiviert wird, wenn eine hinreichende Übereinstimmung zwischen den empfohlenen und den tatsächlichen Beschleunigungs- und Verzögerungswerten festgestellt wurde.

Die Befehle des Anfahrmoduls 18 werden durch das Beschränkungsmodul 24 entweder unterdrückt oder zur Aktorik 14 durchgelassen, so daß im Ergebnis das Anfahrmodul entweder inaktiv oder aktiv ist. Beim Einschalten der Zündung wird generell das Anfahrmodul 18 zunächst in diesem Sinne inaktiv sein. Durch Vergleich des empfohlenen Systemverhaltens 22 mit dem tatsächlichen Fahrerverhalten läßt sich dann feststellen, ob in den Situationen, in denen das Anfahrmodul 18 einen automatischen Anfahrvorgang auslösen würde, auch der Fahrer tatsächlich anfährt. Wenn diese Übereinstimmung mit ausreichender Genauigkeit und statistischer Häufigkeit stattfindet, wird dann das Aktivierungsmodul 30 das Anfahrmodul 18 automatisch aktivieren, indem ein entsprechender Befehl an das Beschränkungsmodul 24 ausgegeben wird.

Auch das Notbremsmodul 20 wird beim Einschalten der Zündung zunächst durch das Beschränkungsmodul 24 deaktiviert sein, da durch Fehlauslösungen der Notbremsung eine erhebliche Unfallgefahr entstehen könnte. Erst nach einer hinreichend langen und erfolgreichen Testphase wird das Notbremsmodul 20 durch das Aktivierungsmodul 30 aktiviert werden. Anders als bei dem Anfahrmodul 18 wird allerdings hier der Test in der Regel nicht darin bestehen, daß man überprüft, ob der Fahrer tatsächlich eine Notbremsung auslöst, wenn das Notbremsmodul 20 eine Notbremsung empfiehlt, denn dieser Fall sollte nicht mit einer signifikanten statistischen Häufigkeit eintreten. Statt dessen wird das Aktivierungsmodul 30 hier andere Kriterien zur Aktivierung den Notbremsmoduls 20 heranziehen. Beispielsweise kann durch Vergleich des empfohlenen Systemverhaltens mit dem Fahrerverhalten bei inaktivem ACC-Modul 16 festgestellt werden, ob die Sensorik korrekt arbeitet. Wenn dies über einen hinreichend langen Zeitraum hinweg der Fall ist, kann das Notbremsmodul 20 aktiviert werden. Andererseits kann die Aktivierung des Notbremsmoduls 20 blockiert oder durch Verlängerung der Testphase verzögert werden, wenn sich bei aktivem ACC-Modul 16 Situationen häufen, in denen das ACC-Modul aufgrund einer falschen Beurteilung der Verkehrssituation eine Verzögerung des Fahrzeugs befiehlt, der Fahrer diesen Befehl jedoch mit dem Gaspedal übersteuert.

Im gezeigten Beispiel kann mit Hilfe des Aktivierungsmoduls 30 der Funktionsumfang nur nach und nach erweitert werden, in dem Maße, wie das "Vertrauen" in die einwandfreie Funktion des Systems wächst. In einer modifizierten Ausführungsform kann jedoch das Aktivierungsmodul 30 auch in der Lage sein, den Funktionsumfang wieder zu beschränken, wenn sich korrigierende Eingriffe des Fahrers häufen.

Während in dem hier beschriebenen Beispiel nur eine beschränkte Anzahl von Assistenzfunktionen in Betracht gezogen wurde, versteht es sich, daß die Erfindung auch bei zahlreichen anderen Assistenzfunktionen anwendbar ist, insbesondere auch bei zahlreichen anderen Funktionserweiterungen von ACC-Systemen, beispielsweise bei Spurwechselassistenten, die mit einem Rückraumradar den rückwärtigen Verkehr auf der Nebenspur (Überholspur) überwachen, oder bei Überholassistenten, die in bestimmten Situationen automatisch einen Überholvorgang empfehlen oder einleiten.

## Patentansprüche

1. Fahrerassistenzsystem mit mindestens einem Funktionsmodul (16, 18, 20), das dazu ausgebildet ist, Empfehlungen für das Systemverhalten (22) zu erzeugen, einem Erfassungsmodul (26) zur Erfassung des tatsächlichen Fahrerverhaltens, einem Vergleichsmodul (28) zum Vergleich der Empfehlungen mit dem tatsächlichen Fahrerverhalten, und einer Aktorik (14) zu Umsetzung der Empfehlungen, **dadurch gekennzeichnet, daß** ein Beschränkungsmodul (24) dazu ausgebildet ist, den Funktionsumfang des Funktionsmoduls (16, 18, 20) zu beschränken, indem es die Empfehlungen ganz oder teilweise unterdrückt, so daß sie zwar noch erzeugt aber nicht an die Aktorik (14) weitergeleitet werden, daß das Erfassungsmodul (26) und das Vergleichsmodul (28) bei beschränktem Funktionsumfang des Funktionsmoduls als Selbsttestvorrichtung zum Test dieses Funktionsmoduls (16, 18, 20) arbeiten, und daß ein Aktivierungsmodul (30) dazu ausgebildet ist, in Abhängigkeit von dem Resultat des von dem Vergleichsmodul (28) durchgeführten Vergleichs auf das Beschränkungsmodul (24) einzuwirken und bei Übereinstimmung der Empfehlungen mit dem tatsächlichen Fahrerverhalten die Beschränkung des Funktionsumfangs aufzuheben.

2. Fahrerassistenzsystem nach Anspruch 1, **dadurch gekennzeichnet, daß** die Beschränkung des Funktionsumfangs darin besteht, daß ein Funktionsmodul unwirksam geschaltet wird.

3. Fahrerassistenzsystem nach Anspruch 1, **dadurch gekennzeichnet, daß** die Veränderung des Funktionsumfangs darin besteht, daß ein den Funktionsumfang beschränkender Parameter (amin, amax) variiert wird.

4. Fahrerassistenzsystem nach einem der vorstehenden Ansprüche, **dadurch gekennzeichnet, daß** das Funktionsmodul oder eines der Funktionsmodule ein ACC-Modul (16) zur Abstands- und Geschwindigkeitsregelung ist.

5. Fahrerassistenzsystem nach den Ansprüchen 3 und 4, **dadurch gekennzeichnet, daß** der variierte Parameter (amin, amax) ein Grenzwert für die Beschleunigung oder Verzögerung des Fahrzeugs ist.

6. Fahrerassistenzsystem nach einem der vorstehenden Ansprüche, **dadurch gekennzeichnet, daß** das Funktionsmodul oder eines der Funktionsmodule ein Anfahrmodul (18) zur Steuerung eines automatischen Anfahrvorgangs des Fahrzeugs ist.

7. Fahrerassistenzsystem nach einem der vorstehenden Ansprüche, **dadurch gekennzeichnet, daß** das Funktionsmodul oder eines der Funktionsmodule ein Notbremsmodul (20) zur Einleitung einer automatischen Notbremsung des Fahrzeugs ist.

## Claims

1. Driver assistance system with at least one function module (16, 18, 20) which is designed to generate recommendations for the system behaviour (22), a detection module (26) for detecting the actual driver behaviour, a comparison module (28) for comparing the recommendations with the actual driver behaviour, and an actuator system (14) for implementing the recommendations, **characterized in that** a limiting module (24) is designed to limit the functional scope of the function module (16, 18, 20) by entirely or partially suppressing the recommendations so that they are still generated but not passed on to the actuator system (14), **in that** the detection module (26) and the comparison module (28) operate as a self-test device for testing this function module (16, 18, 20) during a limited functional scope of the function module, and so that an activation module (30) is designed to act on the limiting module (24) as a function of the result of the comparison carried out by the comparison module (28), and to cancel the limitation of the functional scope when the recommendations correspond to the actual driver behaviour.

2. Driver assistance system according to Claim 1, **characterized in that** the limitation of the functional scope consists in the fact that a function module is deactivated.

3. Driver assistance system according to Claim 1, **characterized in that** the change in the functional scope consists in the fact that a parameter (amin, amax) which limits the functional scope is varied.

4. Driver assistance system according to one of the preceding claims, **characterized in that** the function module or one of the function modules is an ACC module (16) for performing adaptive cruise control.

5. Driver assistance system according to Claim 3 and 4, **characterized in that** the varied parameter (amin, amax) is a limiting value for accelerating or decelerating the vehicle.

6. Driver assistance system according to one of the preceding claims, **characterized in that** the function module or one of the function modules is a starting module (18) for controlling an automatic starting process of the vehicle.

7. Driver assistance system according to one of the preceding claims, **characterized in that** the function module or one of the function modules is an emergency braking module (20) for applying automatic emergency braking of the vehicle.

## Revendications

1. Système d'assistance au conducteur qui présente
au moins un module fonctionnel (16, 18, 20) configuré pour former des recommandations pour le comportement (22) du système,
un module de détection (26) qui détecte le comportement effectif du conducteur,
un module de comparaison (28) qui compare les recommandations au comportement effectif du conducteur et
un système (14) d'actionneurs qui convertit les recommandations,
**caractérisé en ce que**
un module de restriction (24) est configuré pour restreindre l'ampleur du fonctionnement du module fonctionnel (16, 18, 20) en supprimant totalement ou partiellement les recommandations de telle sorte qu'elles ne soient pas transmises au système (14) d'actionneurs bien qu'elles aient été formées,
**en ce que** le module de détection (26) et le module de restriction (28) travaillent pour tester le module fonctionnel (16, 18, 20) lorsque l'ampleur du fonctionnement du module fonctionnel est limitée, en jouant le rôle d'un dispositif d'auto-test, et
**en ce qu'**un module d'activation (30) est configuré pour agir sur le module de restriction (24) en fonction du résultat de la comparaison exécutée par le module de comparaison (28) et supprimer la restriction de l'amplitude du fonctionnement en cas de correspondance entre les recommandations et le comportement effectif du conducteur.

2. Système d'assistance au conducteur selon la revendication 1, **caractérisé en ce que** la restriction de l'ampleur du fonctionnement consiste à commuter un module fonctionnel en mode inactif.

3. Système d'assistance au conducteur selon la revendication 1, **caractérisé en ce que** la modification de l'ampleur du fonctionnement consiste à modifier un paramètre (amin, amax) qui restreint l'ampleur du fonctionnement.

4. Système d'assistance au conducteur selon l'une des revendications précédentes, **caractérisé en ce que** le module fonctionnel ou l'un des modules fonctionnels est un module ACC (16) de régulation de la distance et de la vitesse.

5. Système d'assistance au conducteur selon les revendications 3 et 4, **caractérisé en ce que** le paramètre (amin, amax) modifié est une valeur limite de l'accélération ou du ralentissement du véhicule.

6. Système d'assistance au conducteur selon l'une des revendications précédentes, **caractérisé en ce que** le module fonctionnel ou l'un des modules fonctionnels est un module de démarrage (18) qui commande une opération automatique de démarrage du véhicule.

7. Système d'assistance au conducteur selon l'une des revendications précédentes, **caractérisé en ce que** le module fonctionnel ou l'un des modules fonctionnels est un module (20) de freinage d'urgence qui active automatiquement un freinage d'urgence du véhicule.
